# FASCICULE DE BREVET EUROPEEN

(11) **EP 0 801 633 B1**
(45) Date de publication et mention de la délivrance du brevet: **23.01.2002**
(21) Numéro de dépôt: 96937360.4
(22) Date de dépôt: 30.10.1996
(51) Int. Cl.: C01B 17/04

(54) **PROCEDE D'OXYDATION DE H 2?S EN SOUFRE**
VERFAHREN ZUR OXIDATION VON H2S IN SCHWEFEL
METHOD FOR OXIDISING H 2?S TO SULPHUR

(30) Priorité: 03.11.1995 FR 9512989
(43) Date de publication de la demande: 22.10.1997
(73) Titulaire: ELF AQUITAINE PRODUCTION, 92400 Courbevoie (FR)
(72) Inventeur: NOUGAYREDE, Jean, F-64000 Pau (FR); PHILIPPE, André, F-64300 Orthez (FR); SAVIN-PONCET, Sabine, F-64160 Buros (FR)
(74) Mandataire: Cabinet Hirsch
(86) Numéro de dépôt international: FR9601699
(87) Numéro de publication internationale: WO9717284

(56) Documents cités:
- EP-A- 0 078 690
- EP-A- 0 631 978
- WO-A-94/21555

## Description

L'invention concerne un procédé d'oxydation complète en soufre, de l'H₂S présent dans un gaz en concentration comprise entre 0,7 % et 3 % en volume. Elle se rapporte encore à l'application de ce procédé à la récupération quasi totale, sous la forme de soufre, des composés soufrés contenus dans un gaz résiduaire d'usine à soufre.

Les gaz résiduaires provenant d'une usine à soufre dans laquelle on produit du soufre par le procédé CLAUS d'oxydation ménagée d'un gaz acide renfermant de l'H₂S, au moyen d'un gaz renfermant de l'oxygène libre, contiennent habituellement moins de 4 % en volume de composés soufrés dont une forte proportion consiste en H₂S, le reste étant constitué de SO₂, COS, CS₂ et de soufre vapeur et/ou vésiculaire.

De tels gaz résiduaires sont couramment traités pour en abaisser au maximum la teneur globale en composés soufrés dans le but de permettre leur rejet à l'atmosphère, après les avoir incinérés, en respectant les normes imposées par la législation en matière de pollution atmosphérique et simultanément de récupérer ces composés soufrés sous une forme contribuant à augmenter le rendement en produits valorisables formés à partir du gaz acide traité dans l'usine à soufre.

On connaît divers procédés pour effectuer le traitement d'un gaz résiduaire d'usine à soufre CLAUS et notamment des procédés comportant un traitement combiné d'hydrogénation et d'hydrolyse du gaz résiduaire en vue d'amener les composés soufrés qu'il renferme sous l'unique forme d'H₂S, puis un refroidissement de l'effluent, résultant dudit traitement combiné, à une température appropriée et enfin un traitement de l'effluent gazeux refroidi pour en éliminer l'H₂S. Cette élimination de l'H₂S peut être réalisée soit par absorption de l'H₂S au moyen d'un solvant sélectif régénérable ou encore par oxydation catalytique ménagée de l'H₂S en soufre.

Parmi les procédés du type précité, qui comportent une élimination de l'H₂S par oxydation catalytique en soufre, figure le procédé décrit dans la citation FR-A-2702674, dans lequel, après le traitement combiné d'hydrogénation et d'hydrolyse du gaz résiduaire issu de l'usine à soufre, l'effluent gazeux, résultant dudit traitement et renfermant H₂S comme seul composé soufré, est refroidi à une température comprise entre le point de rosée de l'eau dudit effluent et 180°C et l'effluent gazeux refroidi est mis en contact, en présence d'un gaz renfermant de l'oxygène libre, avec un catalyseur d'oxydation promoteur de l'oxydation sélective de l'H₂S en soufre, en opérant à des températures qui sont maintenues, pendant toute la durée de ladite mise en contact, à des valeurs prises entre ledit -point de rosée et 180°C pour oxyder substantiellement quantitativement en soufre l'H₂S présent dans ledit effluent gazeux et déposer la quasi totalité du soufre formé sur le catalyseur d'oxydation et obtenir un courant gazeux pratiquement exempt d'H₂S.

La citation WO-A-9421555 concerne un procédé d'élimination de l'H₂S contenu dans un gaz, en concentration inférieure à 5% en volume, avec récupération de ce composé sous la forme de soufre. Dans ce procédé, on fait passer le gaz à traiter renfermant H₂S avec un gaz renfermant de l'oxygène libre, en quantité propre à fournir un rapport molaire O₂ : H₂S allant de 0,5 :1 à 3 :1, au contact d'un catalyseur d'oxydation sélective de l'H₂S en soufre, en opérant à des températures choisies entre 60°C et 180°C et de préférence allant de 90°C à 120°C, pour oxyder substantiellement quantitativement en soufre l'H₂S présent dans le gaz à traiter, avec dépôt de la quasi totalité du soufre formé sur le catalyseur, et obtenir un gaz épuré pratiquement exempt d'H₂S. Le catalyseur d'oxydation chargé de soufre est soumis périodiquement à un traitement de régénération par balayage à l'aide d'un gaz non oxydant, en opérant à des températures comprises entre 200°C et 500°C, pour vaporiser le soufre retenu sur le catalyseur, puis le catalyseur régénéré est soumis à un refroidissement, au moyen d'un gaz inerte, jusqu'à une température comprise entre 60°C et 180°C pour une nouvelle mise en oeuvre de la réaction d'oxydation. L'oxydation catalytique peut être réalisée dans un réacteur à plusieurs étages de catalyseur avec refroidissement du milieu réactionnel entre les étages successifs par échange de chaleur avec un fluide froid, cet échange de chaleur ayant lieu à l'intérieur ou à l'extérieur du réacteur d'oxydation. Dans l'exemple présenté dans cette citation, on traite un gaz résiduaire renfermant, en volume, 0,5% d'H₂S en opérant dans un réacteur à un seul étage de catalyseur avec un rapport molaire O₂ : H₂S égal à 1,6 :1 et introduction à 80°C du mélange de gaz à traiter et de gaz renfermant de l'oxygène libre dans le réacteur, le gaz épuré renfermant, en volume, 100 vpm d'H₂S et le taux de conversion de l'H₂S en soufre étant égal à 98%.

La citation EP-A-0631978 décrit un procédé catalytique d'élimination de l'H₂S contenu dans un gaz avec récupération de ce composé sous la forme de soufre, dans lequel le gaz à traiter est mis en contact, en présence d'oxygène, avec un catalyseur d'oxydation de l'H₂S en soufre placé dans deux réacteurs catalytiques disposés en série, en opérant à une température allant de la température de rosée de l'eau à la température de rosée du soufre, pour produire du soufre se déposant sur le catalyseur et un courant de gaz épuré. Dans le premier réacteur catalytique traversé par le gaz à traiter, l'oxydation de l'H₂S en soufre est réalisée au moyen d'une quantité substoechiométrique d'oxygène propre à fournir un rapport molaire O₂ : H₂S allant de 0,4 :1 à 0,49 :1, tandis que dans le second réacteur catalytique traversé par le gaz à traiter, l'oxydation de l'H₂S en soufre est réalisée au moyen d'une quantité d'oxygène égale ou supérieure à la quantité stoechiométrique. Dans l'exemple présenté dans la citation, on traite un gaz naturel renfermant, en volume, 1% d'H₂S en opérant avec un rapport molaire O₂ : H₂S égal à 0,48 : 1 dans le premier réacteur et introduction du mélange de gaz à traiter et de gaz renfermant de l'oxygène libre à 100°C dans le premier réacteur et à 150°C dans le second réacteur, la température des gaz sortant de chacun des premier et second réacteurs étant égale à 150°C.

Selon l'invention, on propose un procédé d'oxydation catalytique complète en soufre, de l'H₂S présent dans un gaz en concentration comprise entre 0,7% et 3% en volume, qui constitue un perfectionnement à l'étape d'oxydation catalytique du procédé décrit dans la citation FR-A-2702674 en ce sens qu'il permet de contrôler plus efficacement la température du catalyseur d'oxydation et ainsi de maintenir une sélectivité optimale en soufre lors de l'oxydation catalytique de l'H₂S au contact dudit catalyseur d'oxydation. La substitution du procédé perfectionné d'oxydation catalytique de l'H₂S selon l'invention à l'étape d'oxydation catalytique de l'H₂S du procédé de traitement de gaz résiduaire d'une usine à soufre décrit dans la citation FR-A-2702674 conduit à un procédé amélioré de traitement d'un gaz résiduaire d'usine à soufre, avec comme résultat la possibilité, pour l'ensemble de traitement d'un gaz acide associant l'usine à soufre et l'installation de traitement de gaz résiduaire de cette usine à soufre mettant en oeuvre ledit procédé amélioré, d'atteindre des rendements globaux en soufre récupéré de 99,9% au moins.

Le procédé selon l'invention pour l'oxydation complète en soufre, de l'H₂S présent dans un gaz en concentration comprise entre 0,7% et 3% en volume, est du type dans lequel on opère dans une unité d'oxydation catalytique comportant une pluralité d'étages d'oxydation catalytique disposés en série et comprenant un étage initial, un étage final et éventuellement au moins un étage intermédiaire, lesdits étages renfermant chacun un catalyseur apte à promouvoir l'oxydation sélective de l'H₂S en soufre dans un intervalle de températures allant de 90°C à 130°C, on introduit le gaz à traiter renfermant H₂S à l'entrée de l'étage initial d'oxydation catalytique avec une température comprise entre 80°C et 100°C et fait passer ledit gaz successivement dans chacun des étages d'oxydation catalytique au contact du catalyseur d'oxydation qu'ils renferment et effectue en outre une injection d'un gaz renfermant de l'oxygène libre dans chacun desdits étages d'oxydation catalytique pour réaliser dans chaque étage d'oxydation catalytique une oxydation au moins partielle de l'H₂S du gaz traversant cet étage en soufre par l'oxygène du gaz renfermant de l'oxygène libre, le soufre formé se déposant sur le catalyseur de chaque étage d'oxydation catalytique, et on évacue en sortie de l'étage final d'oxydation catalytique un gaz épuré à faible teneur résiduelle en H₂S, ledit procédé se caractérisant en ce que l'on amène le gaz renfermant H₂S à une température comprise entre 80°C et 100°C préalablement à son entrée dans chacun des étages intermédiaires éventuels et final d'oxydation catalytique, en ce qu'on contrôle la quantité de gaz renfermant de l'oxygène libre introduite dans l'étage initial et chacun des éventuels étages intermédiaires d'oxydation catalytique de telle sorte que la température du milieu gazeux à la sortie de chacun desdits étages d'oxydation catalytique, qui fonctionnent de manière adiabatique, soit au plus égale à 130°C, en ce que l'on contrôle la quantité de gaz renfermant de l'oxygène libre introduite dans l'étage final d'oxydation catalytique pour fournir un excès prédéterminé d'oxygène dans le gaz épuré entraînant une oxydation totale de l'H₂S passant dans ledit étage final, tout en maintenant des températures au plus égales à 130°C dans cet étage final d'oxydation catalytique, si besoin est par refroidissement dudit étage final par échange indirect de chaleur avec un fluide froid.

Pour amener le gaz renfermant H₂S, c'est-à-dire soit le gaz à traiter renfermant H₂S ou bien le milieu gazeux renfermant H₂S issu de chacun des étages d'oxydation catalytique précédant l'étage final d'oxydation catalytique, à la température comprise entre 80°C et 100°C préalablement à son introduction dans l'étage d'oxydation catalytique, dans lequel il doit être injecté, on procède par échange indirect de chaleur, externe aux étages d'oxydation catalytique, avec un fluide ayant une température appropriée.

Le gaz renfermant de l'oxygène libre introduit dans chacun des étages d'oxydation catalytique peut être amené à l'étage d'oxydation catalytique concerné séparément du gaz renfermant H₂S alimentant cet étage. Il est toutefois préférable de prémélanger ces deux gaz avant leur injection dans l'étage d'oxydation catalytique dans lequel ils doivent être introduits afin d'obtenir un milieu réactionnel très homogène lors du contact avec le catalyseur présent dans ledit étage d'oxydation catalytique. Le prémélange est réalisé, de préférence, avant la phase d'échange indirect de chaleur, externe aux étages d'oxydation catalytique, destinée à amener le gaz renfermant H₂S à la température comprise entre 80°C et 100°C préalablement à son introduction dans l'étage d'oxydation catalytique concerné.

Le gaz renfermant de l'oxygène libre introduit dans chacun des étages d'oxydation catalytique est généralement de l'air, bien qu'il soit possible d'employer de l'oxygène pur ou encore de l'air enrichi en oxygène voire même des mélanges, en proportions variées, d'oxygène et d'un ou plusieurs gaz inertes autres que l'azote.

Les temps de contact du milieu réactionnel gazeux formé par la mise en présence du gaz renfermant de l'oxygène libre et du gaz contenant H₂S dans chacun des étages d'oxydation catalytique avec le catalyseur d'oxydation contenu dans l'étage d'oxydation catalytique concerné peuvent aller de 0,5 seconde à 15 secondes et plus particulièrement de 1 seconde à 10 secondes, ces valeurs étant données dans les conditions normales de température et de pression.

La quantité de gaz renfermant de l'oxygène libre introduite dans l'étage final d'oxydation catalytique est en excès par rapport à la quantité stoechiométrique requise pour oxyder complètement en soufre la totalité de l'H₂S présent dans le gaz renfermant H₂S entrant dans ledit étage final. Ledit excès peut aller jusqu'à quinze fois cette quantité stoechiométrique.

Les différents étages d'oxydation catalytique de l'unité d'oxydation catalytique peuvent renfermer le même catalyseur d'oxydation ou des catalyseurs d'oxydation différents d'un étage d'oxydation catalytique à l'autre. On peut également, dans chaque étage d'oxydation catalytique, faire appel à un catalyseur d'oxydation unique ou à plusieurs catalyseurs d'oxydation utilisés en mélange ou sous la forme de couches distinctes superposées.

Le catalyseur d'oxydation ou chaque catalyseur d'oxydation présent dans un étage d'oxydation catalytique de l'unité d'oxydation catalytique peut être choisi parmi les divers catalyseurs d'oxydation susceptibles de promouvoir une conversion sélective de l'H₂S en soufre sous l'action de l'oxygène, c'est-à-dire de promouvoir la réaction H₂S + 1/2 O₂ → S + H₂O, avec un rendement quantitatif dans un intervalle de températures entre 90°C et 130°C, le soufre formé se déposant sur le catalyseur.

En particulier, le catalyseur d'oxydation sélective de l'H₂S en soufre peut être constitué d'une phase active, consistant en un ou plusieurs oxydes et/ou sels d'un ou plusieurs métaux de transition tels que Ni, Co, Fe, Cu, Ag, Mn, Mo, Cr, W et V, déposée sur un support en un matériau réfractaire tel que, par exemple, bauxite, alumine activée et/ou stabilisée, oxyde de titane, oxyde de zirconium, silice, zéolithes, mélanges silice/alumine, mélanges silice/ oxyde de titane, mélanges silice/oxyde de zirconium, carbure réfractaire ou bien sur un support en charbon actif. Le catalyseur d'oxydation présente un volume poreux permettant une charge en soufre importante. Avantageusement, le volume poreux du catalyseur représente 15 cm³ à 70 cm³ par 100 g de catalyseur. La phase active, comptée en poids de métal, peut représenter 0,1 % à 15 % et plus spécialement 0,2 % à 7 % du poids du catalyseur d'oxydation.

Pour réaliser une oxydation catalytique de l'H₂S en soufre avec une efficacité optimale dans l'unité d'oxydation catalytique, il est nécessaire que, tout au long de l'étape d'oxydation de l'H₂S dans ladite unité, le catalyseur d'oxydation présent dans chaque étage d'oxydation catalytique de l'unité d'oxydation catalytique ait une température qui est au plus égale à la température maximale du domaine de températures pour lequel le catalyseur d'oxydation est apte à promouvoir l'oxydation sélective de l'H₂S en soufre. Conviennent pour la mise en oeuvre de la réaction d'oxydation de l'H₂S en soufre dans" chacun des étages catalytiques de l'unité d'oxydation catalytique, des températures comprises dans l'intervalle entre 90°C et 130°C.

Le maintien de la température du catalyseur d'oxydation dans l'étage initial d'oxydation catalytique et dans chacun des éventuels étages intermédiaires d'oxydation catalytique, qui fonctionnent de manière adiabatique, est réalisé en contrôlant la quantité de gaz renfermant de l'oxygène libre introduite dans chacun desdits étages d'oxydation catalytique. L'étage final d'oxydation catalytique, qui opère en excès contrôlé d'air pour obtenir une élimination totale de l'H₂S dans le gaz épuré sortant de l'unité d'oxydation catalytique, peut fonctionner de manière adiabatique, lorsque la teneur en H₂S du gaz entrant dans ledit étage final est telle que la température du milieu réactionnel sortant de cet étage final, à l'issue de l'oxydation de l'H₂S en soufre, soit au plus égale à 130°C. Si la concentration en H₂S du gaz entrant dans l'étage final d'oxydation catalytique est telle que la température du milieu réactionnel issu de l'oxydation de l'H₂S en soufre dans ledit étage est susceptible de dépasser la température maximale précitée, au-delà de laquelle le catalyseur d'oxydation n'a plus la sélectivité requise pour l'oxydation de l'H₂S en soufre, on évacue les calories dégagées par ladite réaction d'oxydation en soumettant le catalyseur de l'étage final d'oxydation catalytique à un refroidissement par toute méthode connue, pour maintenir la température de mise en oeuvre de la réaction d'oxydation à la valeur choisie pour conserver ladite sélectivité en soufre. On peut, par exemple, réaliser ledit refroidissement à l'aide d'un fluide froid circulant en échange indirect de chaleur avec le catalyseur de l'étage final d'oxydation catalytique au sein dudit catalyseur.

Au cours de l'oxydation de l'H₂S en soufre dans l'unité d'oxydation catalytique, les catalyseurs des étages d'oxydation catalytique de ladite unité se chargent progressivement en soufre. Périodiquement, on procède à la régénération des catalyseurs d'oxydation chargés de soufre par balayage desdits catalyseurs à l'aide d'un gaz non oxydant en opérant à des températures comprises entre 200°C et 500°C, par exemple entre 250°C et 450°C, pour vaporiser le soufre retenu sur les catalyseurs des étages d'oxydation catalytique, puis on refroidit les catalyseurs régénérés jusqu'à la température requise pour une nouvelle mise en oeuvre de la réaction d'oxydation, ce refroidissement étant réalisé au moyen d'un gaz ayant une température appropriée. Le gaz de refroidissement peut être éventuellement chargé de vapeur d'eau au moins pendant la phase finale du refroidissement des catalyseurs régénérés.

Le gaz de balayage, utilisé pour la régénération des catalyseurs d'oxydation chargés de soufre des étages d'oxydation catalytique de l'unité d'oxydation catalytique, peut être tel que méthane, azote, CO₂ ou mélanges de tels gaz ou encore consister en une fraction du gaz à traiter. Le gaz de balayage utilisé pour la régénération précitée peut éventuellement contenir une certaine proportion d'un composé réducteur gazeux, par exemple H₂, CO, ou H₂S, au moins au cours de la phase finale de la régénération, c'est-à-dire après la vaporisation de la plus grande partie du soufre déposé sur les catalyseurs des étages d'oxydation catalytique de l'unité d'oxydation catalytique.

On peut mettre en oeuvre l'oxydation de l'H₂S du gaz à traiter dans une unité d'oxydation catalytique unique renfermant une pluralité d'étages d'oxydation catalytique disposés en série et comprenant un étage initial et un étage final éventuellement séparés par un ou plusieurs étages intermédiaires, ladite unité opérant alternativement en phase d'oxydation catalytique et en phase de régénération/refroidissement. Avantageusement, on opère en faisant appel à plusieurs unités d'oxydation catalytique telles que précitées, qui fonctionnent de telle sorte que l'une au moins desdites unités soit en phase régénération/refroidissement, tandis que les autres unités sont en phase d'oxydation catalytique. On peut encore opérer dans une pluralité d'unités d'oxydation catalytique du type ci-dessus, avec une ou plusieurs desdites unités en phase d'oxydation catalytique, au moins une unité en phase de régénération et au moins une unité en phase de refroidissement.

Le gaz utilisé pour la régénération des catalyseurs contenus dans les étages d'oxydation catalytique d'une unité d'oxydation catalytique, circule de préférence en circuit fermé à partir d'une zone de chauffage, en passant successivement par les étages d'oxydation catalytique de l'unité d'oxydation catalytique en cours de régénération et par une zone de refroidissement, dans laquelle la majeure partie du soufre contenu dans ledit gaz est séparée par condensation, pour revenir à la zone de chauffage. Bien entendu, le gaz de régénération peut également circuler en circuit ouvert.

Le gaz utilisé pour le refroidissement des catalyseurs régénérés est du même type que celui employé pour la régénération des catalyseurs chargés de soufre. Les circuits de gaz de régénération et de gaz de refroidissement peuvent être indépendants l'un de l'autre. Toutefois, selon un mode de réalisation, le circuit de gaz de régénération défini ci-dessus peut également comporter une dérivation reliant la sortie de sa zone de refroidissement à l'entrée de l'unité d'oxydation catalytique en cours de régénération en bipassant sa zone de chauffage, ce qui permet de court-circuiter ladite zone de chauffage et ainsi d'utiliser le gaz de régénération comme gaz de refroidissement.

Le gaz que l'on traite par le procédé selon l'invention renferme H₂S comme seul composé soufré en concentration comprise entre 0,7 % et 3 % en volume. Ledit gaz renfermant H₂S peut avoir des origines diverses. En particulier, un tel gaz peut être un gaz naturel à faible teneur en H₂S ou encore un gaz provenant de la gazéification du charbon ou des huiles lourdes. Tout particulièrement, le gaz auquel on applique le procédé selon l'invention est un gaz résultant de l'application d'une étape combinée d'hydrogénation et d'hydrolyse à un gaz résiduaire d'usine à soufre pour transformer en H₂S tous les composés soufrés contenus dans ledit gaz résiduaire.

Au cours de l'étape combinée d'hydrogénation et d'hydrolyse, qui est habituellement effectuée en présence d'un catalyseur, les composés soufrés tels que SO₂, CS₂, COS ainsi que le soufre vapeur et/ou vésiculaire contenus dans le gaz résiduaire sont transformés en H₂S soit sous l'action de l'hydrogène, cas de SO₂ et du soufre vapeur ou/et vésiculaire, ou par hydrolyse, cas de COS et CS₂, sous l'action de la vapeur d'eau présente dans ledit gaz résiduaire. Le traitement combiné d'hydrogénation et d'hydrolyse est réalisé à des températures pouvant aller de 140°C à 550°C environ et de préférence se situant entre 200°C et 400°C environ. L'hydrogène nécessaire à la réaction d'hydrogénation peut être déjà contenu dans le gaz résiduaire ou être formé in situ dans la zone d'hydrogénation et d'hydrolyse, par exemple par réaction de CO sur H₂O lorsque le gaz résiduaire renferme ces deux réactifs, ou encore être ajouté au gaz résiduaire à partir d'une source extérieure d'hydrogène. Une manière commode de fournir H₂ et CO au gaz résiduaire consiste à ajouter audit gaz résiduaire les gaz de combustion produits par un brûleur de gaz combustible fonctionnant en sous stoechiométrie. La quantité d'hydrogène à utiliser doit être suffisante pour obtenir une transformation pratiquement complète en H₂S des composés ou produits soufrés hydrogénables, tels que SO₂, soufre vapeur et/ou vésiculaire, contenus dans le gaz résiduaire soumis au traitement d'hydrogénation et d'hydrolyse. En pratique, la quantité d'hydrogène employée peut aller de 1 à 6 fois la quantité stoechiométrique requise pour transformer en H₂S les produits soufrés hydrogénables présents dans le gaz résiduaire.

Si le gaz résiduaire ne renferme pas suffisamment de vapeur d'eau pour l'hydrolyse des composés organiques du soufre COS et CS₂, on peut lui ajouter la quantité requise de vapeur d'eau avant d'effectuer le traitement combiné d'hydrogénation et d'hydrolyse.

Des catalyseurs utilisables pour le traitement d'hydrogénation et d'hydrolyse sont ceux qui contiennent des composés de métaux des groupes Va, VIa et VIII de la Classification Périodique des Eléments, par exemple des composés de métaux tels que cobalt, molybdène, chrome, vanadium, thorium, nickel, tungstène, uranium, lesdits composés étant déposés ou non sur un support du type silice, alumine, silice/alumine. Sont particulièrement efficaces pour le traitement d'hydrogénation et d'hydrolyse les catalyseurs d'hydrodésulfuration à base d'oxydes de cobalt et de molybdène déposés sur alumine. Pour ce traitement d'hydrogénation et d'hydrolyse, les temps de contact entre le milieu réactionnel gazeux et le catalyseur peuvent varier assez largement. Ils se situent avantageusement entre 0,5 et 8 secondes et plus particulièrement entre 1 et 5 secondes, ces valeurs étant données dans les conditions normales de pression et de température.

L'effluent gazeux résultant du traitement combiné d'hydrogénation et d'hydrolyse, qui généralement renferme H₂S comme seul composé soufré en concentration volumique comprise dans les limites précitées, est ensuite traité pour en récupérer l'H₂S sous la forme de soufre en faisant appel au procédé selon l'invention.

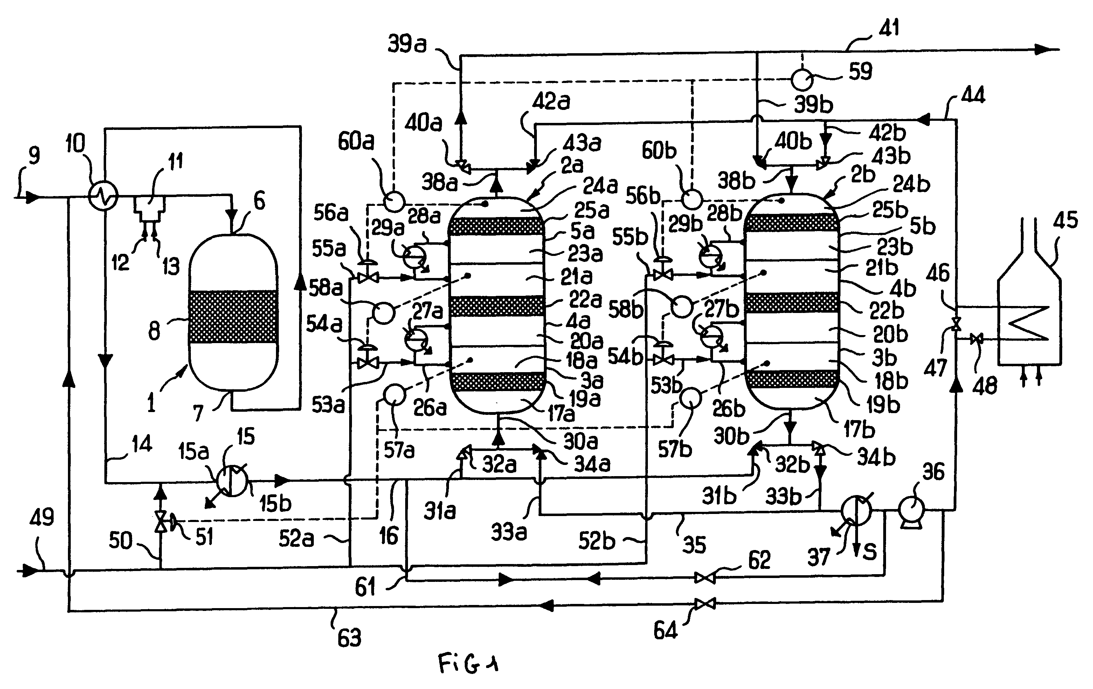

L'invention sera mieux comprise à la lecture de la description donnée ci-après de l'une de ses formes de réalisation intégrée dans un procédé de traitement de gaz résiduaire d'usine à soufre, ledit procédé de traitement étant mis en oeuvre dans l'installation représentée schématiquement sur la figure unique du dessin annexé.

Cette installation associe un réacteur 1 d'hydrogénation et d'hydrolyse et deux unités d'oxydation catalytique 2a et 2b, lesdites unités d'oxydation catalytique, qui mettent en oeuvre le procédé selon l'invention, étant montées en parallèle et renfermant chacune trois étages d'oxydation catalytique disposés en série et pourvus chacun d'un catalyseur d'oxydation sélective de l'H₂S en soufre. Plus précisément, l'unité d'oxydation catalytique 2a comporte un étage initial 3a, un étage intermédiaire 4a et un étage final 5a d'oxydation catalytique, tandis que l'unité d'oxydation catalytique 2b comporte un étage initial 3b, un étage intermédiaire 4b et un étage final 5b d'oxydation catalytique.

Le réacteur 1 d'hydrogénation et d'hydrolyse comporte une entrée 6 et une sortie 7 séparées l'une de l'autre par un lit fixe 8 d'un catalyseur d'hydrogénation du SO₂ et du soufre en H₂S et d'hydrolyse des composés COS et CS₂ en H₂S. Un conduit 9 d'amenée de gaz, sur lequel sont montés le circuit froid d'un échangeur indirect de chaleur 10 du type échangeur gaz/gaz et un brûleur en ligne 11 de chauffage d'appoint, pourvu d'une tubulure 12 d'amenée d'un gaz combustible et d'une tubulure 13 d'amenée d'air, connecte l'entrée 6 du réacteur d'hydrogénation et d'hydrolyse 1 à la source de gaz résiduaire à traiter, par exemple à la sortie d'une usine à soufre non représentée. La sortie 7 du réacteur d'hydrogénation et d'hydrolyse 1 se prolonge par un conduit 14 d'évacuation pour les gaz, ledit conduit étant connecté, à travers le circuit chaud de l'échangeur indirect de chaleur 10, à l'entrée 15a d'un échangeur indirect de chaleur 15, dont la sortie 15b est prolongée par un conduit 16.

Dans l'unité d'oxydation catalytique 2a, l'étage initial 3a d'oxydation catalytique présente une première extrémité 17a et une deuxième extrémité 18a séparées par un lit fixe 19a d'un catalyseur promoteur de l'oxydation sélective de l'H₂S en soufre. L'étage intermédiaire 4a d'oxydation catalytique présente une première extrémité 20a et une deuxième extrémité 21a séparées par un lit fixe 22a d'un catalyseur d'oxydation sélective de l'H₂S en soufre. L'étage final 5a d'oxydation catalytique présente une première extrémité 23a et une deuxième extrémité 24a séparées par un lit fixe 25a d'un catalyseur d'oxydation sélective de l'H₂S en soufre. La deuxième extrémité 18a de l'étage initial d'oxydation catalytique 3a est adjacente à la première extrémité 20a de l'étage intermédiaire d'oxydation catalytique 4a et communique avec cette dernière par un conduit de liaison 26a sur lequel est monté un échangeur indirect de chaleur 27a. De même, la deuxième extrémité 21a de l'étage intermédiaire d'oxydation catalytique 4a est adjacente à la première extrémité 23a de l'étage final d'oxydation catalytique 5a et communique avec cette dernière par un conduit de liaison 28a sur lequel est monté un échangeur indirect de chaleur 29a.

Dans l'unité d'oxydation catalytique 2b, l'étage initial 3b d'oxydation catalytique présente une première extrémité 17b et une deuxième extrémité 18b séparées par un lit fixe 19b d'un catalyseur promoteur de l'oxydation sélective de l'H₂S en soufre. L'étage intermédiaire 4b d'oxydation catalytique présente une première extrémité 20b et une deuxième extrémité 21b séparées par un lit fixe 22b d'un catalyseur d'oxydation sélective de l'H₂S en soufre. L'étage final 5b d'oxydation catalytique présente une première extrémité 23b et une deuxième extrémité 24b séparées par un lit fixe 25b d'un catalyseur d'oxydation sélective de l'H₂S en soufre. La deuxième extrémité 18b de l'étage initial 3b d'oxydation catalytique est adjacente à la première extrémité 20b de l'étage intermédiaire d'oxydation catalytique 4b et communique avec cette dernière par un conduit de liaison 26b sur lequel est monté un échangeur indirect de chaleur 27b. De même, la deuxième extrémité 21b de l'étage intermédiaire 4b d'oxydation catalytique est adjacente à la première extrémité 23b de l'étage final d'oxydation catalytique 5b et communique avec cette dernière par un conduit de liaison 28b sur lequel est monté un échangeur indirect de chaleur 29b.

La première extrémité 17a de l'étage initial 3a d'oxydation catalytique de l'unité d'oxydation catalytique 2a est munie d'un conduit 30a, qui est relié, d'une part, par un conduit 31a muni d'une vanne 32a au conduit 16 prolongeant l'échangeur indirect de chaleur 15 et, d'autre part, par un conduit 33a muni d'une vanne 34a, à un conduit 35 connecté lui-même à l'orifice d'aspiration d'une soufflante 36 et sur lequel est monté un condenseur à soufre 37.

De même, la première extrémité 17b de l'étage initial 3b d'oxydation catalytique de l'unité d'oxydation catalytique 2b est munie d'un conduit 30b, qui est relié, d'une part, par un conduit 31b muni d'une vanne 32b au conduit 16 précité et, d'autre part, par un conduit 33b muni d'une vanne 34b audit conduit 35 en un point de ce conduit situé entre le condenseur à soufre 37 et le conduit 33a.

La deuxième extrémité 24a de l'étage final 5a d'oxydation catalytique de l'unité d'oxydation catalytique 2a est munie d'un conduit 38a, qui est relié, d'une part, par un conduit 39a muni d'une vanne 40a à un conduit d'évacuation 41 du gaz résiduaire épuré et, d'autre part, par un conduit 42a muni d'une vanne 43a à un conduit 44 prolongeant l'orifice de refoulement de la soufflante 36. Le conduit 44 traverse un réchauffeur 45 et porte une dérivation 46, qui est munie d'une vanne 47 et court-circuite le réchauffeur, et il comporte également une vanne 48 située entre le réchauffeur et la partie de la dérivation 46 située en amont du réchauffeur.

De même, la deuxième extrémité 24b de l'étage final 5b d'oxydation catalytique de l'unité d'oxydation catalytique 2b est munie d'un conduit 38b, qui est relié, d'une part, par un conduit 39b muni d'une vanne 40b audit conduit 41 d'évacuation du gaz résiduaire épuré et, d'autre part, par un conduit 42b muni d'une vanne 43b au conduit 44 entre la dérivation 46 et le conduit 42a.

Un conduit 49 d'amenée d'air est relié, par un conduit 50 muni d'une vanne 51 à ouverture réglable, au conduit 14, connecté au conduit 16 à travers l'échangeur de chaleur 15, pour l'injection d'air dans l'étage initial 3a d'oxydation catalytique de l'unité d'oxydation catalytique 2a et dans l'étage initial 3b d'oxydation catalytique de l'unité d'oxydation catalytique 2b. Le conduit 49 d'amenée d'air porte en outre un piquage 52a relié par un conduit 53a, muni d'une vanne 54a à ouverture réglable, au conduit 26a en amont de l'échangeur de chaleur 27a, pour l'injection d'air dans l'étage intermédiaire 4a d'oxydation catalytique de l'unité d'oxydation catalytique 2a, ledit piquage 52a étant également connecté par un conduit 55a, muni d'une vanne à ouverture réglable 56a, au conduit 28a en amont de l'échangeur de chaleur 29a, pour l'injection d'air dans l'étage final 5a d'oxydation catalytique de l'unité d'oxydation catalytique 2a. Le conduit 49 porte également un piquage 52b relié par un conduit 53b, muni d'une vanne 54b à ouverture réglable, au conduit 26b en amont de l'échangeur de chaleur 27b, pour l'injection d'air dans l'étage intermédiaire 4b d'oxydation catalytique de l'unité d'oxydation catalytique 2b, ledit piquage 52b étant également connecté par un conduit 55b, muni d'une vanne 56b à ouverture réglable, au conduit 28b en amont de l'échangeur de chaleur 29b, pour l'injection d'air dans l'étage final 5b d'oxydation catalytique de l'unité d'oxydation catalytique 2b.

Un contrôleur de température 57a, dont l'élément sensible est placé dans l'extrémité 18a de l'étage initial 3a d'oxydation catalytique de l'unité d'oxydation catalytique 2a, et un contrôleur de température 57b, dont l'élément sensible est placé dans l'extrémité 18b de l'étage initial 3b d'oxydation catalytique de l'unité d'oxydation catalytique 2b, assurent le réglage de l'ouverture de la vanne 51 montée sur le conduit 50, ce qui permet l'ajustement du débit d'air introduit dans ledit étage initial 3a ou ledit étage initial 3b d'oxydation catalytique et ainsi le maintien de la température en sortie de ces étages à la valeur choisie. Un contrôleur de température 58a, dont l'élément sensible est placé dans l'extrémité 21a de l'étage intermédiaire 4a d'oxydation catalytique de l'unité d'oxydation catalytique 2a, assure le réglage de l'ouverture de la vanne 54a placée sur le conduit d'injection d'air 53a pour maintenir la température en sortie dudit étage intermédiaire à la valeur requise. De même un contrôleur de température 58b, dont l'élément sensible est placé dans l'extrémité 21b de l'étage intermédiaire 4b d'oxydation catalytique de l'unité d'oxydation catalytique 2b, assure le réglage de l'ouverture de la vanne 54b placée sur le conduit d'injection d'air 53b pour maintenir la température en sortie dudit étage intermédiaire à la valeur appropriée. Un régulateur 59 de teneur en oxygène est monté sur le conduit 41 d'évacuation du gaz résiduaire épuré en aval des conduits 39a et 39b et règle l'ouverture de la vanne 56a montée sur le conduit 55a d'injection d'air dans l'étage final 5a d'oxydation catalytique de l'unité d'oxydation catalytique 2a ou bien l'ouverture de la vanne 56b montée sur le conduit 55b d'injection d'air dans l'étage final 5b d'oxydation catalytique de l'unité d'oxydation catalytique 2b, ce qui assure l'ajustement du débit d'air en excès introduit dans ledit étage final 5a ou ledit étage final 5b d'oxydation catalytique. Un contrôleur de température 60a, dont l'élément sensible est placé dans l'extrémité 24a de l'étage final 5a d'oxydation catalytique de l'unité d'oxydation catalytique 2a et un contrôleur de température 60b, dont l'élément sensible est placé dans l'extrémité 24b de l'étage final 5b d'oxydation catalytique de l'unité d'oxydation catalytique 2b, permettent de maintenir la température dans l'étage final 5a ou l'étage final 5b à la valeur requise.

L'étage final 5a d'oxydation catalytique de l'unité d'oxydation catalytique 2a, de même que l'étage final 5b d'oxydation catalytique de l'unité d'oxydation catalytique 2b peuvent être équipés d'un système de maintien du lit catalytique en température, ledit système pouvant être de tout type connu et pouvant consister, par exemple, en un serpentin, qui est disposé au sein du lit catalytique présent dans ledit étage final et qui est parcouru par un fluide ayant une température appropriée.

Un conduit d'équilibrage 61 muni d'une vanne 62 relie le conduit 16, en un point de ce dernier conduit situé entre l'échangeur de chaleur 15 et la jonction du conduit 16 et du conduit 31a, au conduit 35, en un point de ce conduit 35 situé entre la soufflante 36 et le condenseur à soufre 37, tandis qu'un conduit de purge 63 muni d'une vanne 64 relie le conduit 44, en un point de ce dernier situé entre la soufflante 36 et le réchauffeur 45, au conduit 9 en un point de ce dernier situé en amont de l'échangeur de chaleur 10.

Le fonctionnement de l'installation décrite ci-dessus peut être schématisé comme suit.

On suppose que l'unité d'oxydation catalytique 2a est en phase de réaction et que l'unité d'oxydation catalytique 2b est en phase de régénération, les vannes 32a, 40a, 34b, 43b, 54a, 56a et 48 étant ouvertes, tandis que les vannes 34a, 43a, 32b, 40b, 54b, 56b et 47 sont fermées, les vannes d'équilibrage 62 et de purge étant ouvertes.

Le gaz résiduaire arrivant de l'usine à soufre par le conduit 9, passe dans l'échangeur de chaleur 10, puis traverse le brûleur 11, dans lequel il est mélangé aux gaz de combustion produits par ce brûleur, qui réalise une combustion d'un gaz combustible, amené par la tubulure 12, au moyen d'air, amené par la tubulure 13, en opérant en sous-stoechiométrie pour fournir, outre des calories, une quantité appropriée d'H₂ et de CO. Lors de son passage dans le brûleur 11, le gaz résiduaire est réchauffé, par les gaz de combustion, à la température requise pour l'hydrogénation et l'hydrolyse, par exemple 200°C à 400°C, et en même temps il reçoit également l'hydrogène et le CO produits lors de la combustion. Le mélange chaud du gaz résiduaire et des gaz de combustion, issu du brûleur 11, passe dans le réacteur 1 d'hydrogénation et d'hydrolyse renfermant une quantité appropriée d'un catalyseur susceptible de promouvoir l'hydrogénation du SO₂ et du soufre élémentaire en H₂S ainsi que l'hydrolyse des composés COS et CS₂ en H₂S, ledit catalyseur étant par exemple à base de cobalt et de molybdène. Dans le réacteur 1, les composés soufrés, autres que H₂S, présents dans le gaz résiduaire, sont convertis quasi complètement en H₂S. L'effluent gazeux sortant, par le conduit 14, du réacteur 1, dont la température est de l'ordre de 280°C à 450°C, passe ensuite dans l'échangeur de chaleur 10, où il réchauffe le gaz résiduaire passant par le conduit 9, puis il est additionné d'une quantité initiale d'air par le conduit 50, à travers la vanne 51 à ouverture réglable, et le mélange ainsi formé est refroidi dans l'échangeur de chaleur 15 pour obtenir à la sortie dudit échangeur 15 un mélange gazeux réactionnel initial refroidi ayant une température dans l'intervalle 80°C-100°C.

Ledit mélange réactionnel gazeux initial est introduit, par le conduit 16 et les conduits 31a et 30a, dans l'étage initial 3a d'oxydation catalytique de l'unité d'oxydation catalytique 2a. Dans cet étage initial 3a d'oxydation catalytique, une fraction de l'H₂S du milieu réactionnel gazeux initial entrant dans ledit étage est oxydée sélectivement en soufre par l'air contenu dans ce milieu réactionnel, au contact du catalyseur d'oxydation présent dans cet étage, le soufre formé se déposant sur le catalyseur. L'oxydation est réalisée de manière adiabatique avec ajustement de la quantité d'air amenée à l'étage initial 3a, ledit ajustement étant assuré par le contrôleur de température 57a agissant sur la vanne 51, de telle sorte que la température du milieu gazeux résultant de l'oxydation soit maintenue à une valeur au plus égale à la température maximale au-delà de laquelle le catalyseur d'oxydation n'a plus la sélectivité en soufre requise. Le milieu gazeux issu de l'étage initial 3a d'oxydation catalytique, par le conduit 26a, est additionné, en amont de l'échangeur de chaleur 27a, d'une quantité intermédiaire d'air, amenée par le conduit 53a à travers la vanne 54a à ouverture réglable, pour constituer un mélange réactionnel intermédiaire qui, après refroidissement à une température dans l'intervalle 80°C-100°C dans l'échangeur de chaleur 27a, est introduit dans l'étage intermédiaire 4a de l'unité d'oxydation catalytique 2a. Dans cet étage intermédiaire 4a, une fraction de l'H₂S encore présent dans le milieu réactionnel gazeux intermédiaire, entrant dans ledit étage, est oxydée sélectivement en soufre par l'air contenu dans ce milieu réactionnel intermédiaire, au contact du catalyseur d'oxydation présent dans cet étage, le soufre formé se déposant sur le catalyseur. L'oxydation est réalisée de manière adiabatique avec ajustement de la quantité d'air amenée à l'étage intermédiaire 4a, ledit ajustement étant assuré par le contrôleur de température 58a agissant sur la vanne 54a, de telle sorte que la température du milieu gazeux résultant de l'oxydation soit maintenue à une valeur au plus égale à la température maximale au-delà de laquelle le catalyseur d'oxydation n'a plus la sélectivité en soufre requise. Le milieu gazeux issu de l'étage intermédiaire 4a d'oxydation catalytique, par le conduit 28a, est additionné, en amont de l'échangeur de chaleur 29a, d'une quantité finale d'air en excès, amenée par le conduit 55a à travers la vanne 56a à ouverture réglable, pour constituer un mélange réactionnel final, qui, après refroidissement à une température dans l'intervalle 80°C-100°C dans l'échangeur de chaleur 29a, est introduit dans l'étage final 5a de l'unité d'oxydation catalytique 2a. Dans cet étage final 5a, la totalité de l'H₂S présent dans le milieu réactionnel gazeux final entrant dans ledit étage est oxydée sélectivement en soufre par l'air en excès contenu dans ce milieu réactionnel, au contact du catalyseur d'oxydation présent dans cet étage, le soufre formé se déposant sur le catalyseur. L'excès d'air amené à l'étage final 5a d'oxydation catalytique est choisi pour assurer une élimination totale de l'H₂S contenu dans le milieu gazeux réactionnel passant dans ledit étage final sans formation de SO₂ au contact du soufre formé par la réaction et déposé sur le catalyseur. Le contrôle dudit excès d'air est assuré par le régulateur 59 de teneur en oxygène monté sur le conduit 41 d'évacuation du gaz résiduaire épuré et agissant sur la vanne 56a. La température dans l'étage final 5a est au plus égale à 130°C. Le maintien de la température d'oxydation dans l'étage final 5a peut être assuré par le contrôleur de température 60a. Si besoin est pour faciliter le maintien de la température d'oxydation dans l'étage final 5a, on peut refroidir le lit de catalyseur contenu dans cet étage, par échange indirect de chaleur avec un fluide froid circulant, par exemple, dans un conduit au sein du lit catalytique ou par toute autre méthode connue.

Par le conduit 38a sort un gaz résiduaire épuré quasi totalement, qui est dirigé, par le conduit 39a à travers la vanne 40a, dans le conduit d'évacuation 41 du gaz résiduaire épuré.

Un courant de gaz de balayage non oxydant est envoyé par la soufflante 36 dans le conduit 44 à travers la vanne 48 et le réchauffeur 45, dans lequel ce courant gazeux est réchauffé à la température appropriée pour la régénération. Le courant gazeux réchauffé, circulant dans le conduit 44, est introduit dans l'unité d'oxydation catalytique 2b par le conduit 42b, à travers la vanne 43b, et le conduit 38b et balaie tout d'abord le catalyseur d'oxydation 25b chargé de soufre contenu dans l'étage 5b de l'unité d'oxydation catalytique 2b, puis, après passage par le conduit 28b, il balaie le catalyseur d'oxydation 22b chargé de soufre contenu dans l'étage 4b de l'unité d'oxydation catalytique 2b et enfin, après passage par le conduit 26b, il balaie le catalyseur d'oxydation 19b chargé de soufre de l'étage 3b de l'unité d'oxydation catalytique 2b. Le courant de gaz de balayage, entraînant le soufre vaporisé, sort de l'unité d'oxydation catalytique 2b par le conduit 30b et s'écoule par le conduit 33b, à travers la vanne 34b, jusqu'au condenseur à soufre 37, dans lequel la majeure partie du soufre se sépare par condensation. A la sortie du condenseur 37, le courant de gaz de balayage est repris par la soufflante 36 pour être refoulé dans le conduit 44 comme indiqué plus haut.

Après une durée suffisante de balayage des catalyseurs contenus dans l'unité d'oxydation catalytique 2b par le gaz de balayage passant dans le réchauffeur 45, pour éliminer complètement le soufre déposé sur les catalyseurs, on ouvre la vanne 47 et ferme la vanne 48 de manière à court-circuiter le réchauffeur 45 et à abaisser la température du gaz de balayage, et l'on poursuit le balayage pendant une durée appropriée pour refroidir les catalyseurs régénérés 19b, 22b et 25b contenus dans les étages 3b, 4b et 5b d'oxydation catalytique de l'unité d'oxydation catalytique 2b.

Lorsque lesdits catalyseurs ont été refroidis à une température convenable permettant leur réutilisation en phase de réaction, on permute les rôles joués par les unités d'oxydation catalytique 2a et 2b, c'est-à-dire qu'on amène l'unité d'oxydation catalytique 2b en phase d'oxydation catalytique et l'unité d'oxydation catalytique 2a en phase de régénération/refroidissement en fermant les vannes 32a, 40a, 34b, 43b, 47, 54a et 56a et en ouvrant les vannes 34a, 43a, 32b, 40b, 48, 54b et 56b. Pendant la période transitoire de permutation des rôles des unités d'oxydation catalytique 2a et 2b, on amène le gaz de balayage à circuler dans un conduit non représenté bipassant ces unités.

Pour compléter la description du traitement incluant l'utilisation du procédé selon l'invention présentée ci-dessus, on donne ci-après, à titre non limitatif, un exemple concret dudit traitement.

### EXEMPLE :

En faisant appel à une installation analogue à celle qui est schématisée sur la figure du dessin annexé et qui fonctionne comme décrit précédemment, on traitait un gaz résiduaire d'une usine à soufre ayant la composition suivante, en pourcentage en volume :

| | | | | | |
|---|---|---|---|---|---|
| H₂S | 0,76 | N₂ | 60,10 | COS | 0,01 |
| SO₂ | 0,38 | H₂ | 2,72 | CS₂ | 0,01 |
| CO₂ | 2,10 | CO | 0,34 | | |
| H₂O | 33,51 | S₁ | 0,07 | | |

Ledit gaz résiduaire était issu d'une usine à soufre CLAUS, dans laquelle on effectuait l'oxydation ménagée, par l'air, d'un gaz acide constitué, en volume, de 90 % d'H₂S, 5,4 % de CO₂, 4 % d'eau et 0,6 % d'hydrocarbures.

Le rendement de récupération de l'usine à soufre fournissant le gaz résiduaire soumis au traitement était égal à 96,3 %.

Le réacteur d'hydrogénation et d'hydrolyse renfermait un catalyseur promoteur à la fois de l'hydrolyse des composés COS et CS₂ en H₂S et de l'hydrogénation de SO₂ et du soufre vapeur en H₂S, ledit catalyseur étant un catalyseur du type cobalt/molybdène sur support d'alumine.

Les trois étages de chacune des unités d'oxydation catalytique renfermaient chacun un catalyseur d'oxydation sélective de l'H₂S en soufre par l'oxygène consistant en une alumine au nickel renfermant 4 % de nickel en poids, ledit catalyseur étant obtenu par imprégnation d'une alumine activée à l'aide de la quantité d'acétate de nickel en solution aqueuse, puis séchage de l'alumine imprégnée à 100°C et calcination du produit séché à 300°C pendant 3 heures. Ce catalyseur présentait un volume poreux égal à 46 cm³ par 100 g de catalyseur et conservait la sélectivité requise en soufre jusqu'à une température égale à 120°C.

Le temps de contact des gaz passant dans le réacteur d'hydrogénation et d'hydrolyse avec le catalyseur contenu dans ledit réacteur était égal à 4 secondes. Les temps de contact des gaz passant dans chacun des étages d'oxydation catalytique de l'unité d'oxydation catalytique opérant en phase de réaction avec le catalyseur contenu dans l'étage considéré avaient des valeurs égales à 2 secondes pour l'étage initial, 3 secondes pour l'étage intermédiaire et 5 secondes pour l'étage final.

Le gaz résiduaire, arrivant par le conduit 9 avec un débit de 192 kmoles/heure et une température d'environ 132°C, était porté à environ 300°C après passage dans l'échangeur indirect de chaleur 10 et le brûleur 11 et entrait à cette température dans le réacteur 1 d'hydrogénation et d'hydrolyse.

Dans le réacteur 1, la conversion de SO₂, S, COS et CS₂ en H₂S était pratiquement totale et l'effluent gazeux, sortant dudit réacteur 1, avait une température de 330°C et renfermait seulement H₂S comme composé soufré en concentration volumique égale à 1,2 %. Cet effluent gazeux, dont le débit était égal à 198 kmoles/h, subissait un premier refroidissement, par passage dans l'échangeur de chaleur 10, puis était additionné de 2,1 kmoles/h d'air à 40°C par le conduit 50, et le mélange gazeux ainsi formé était refroidi à 90°C, par passage dans l'échangeur de chaleur 15, pour constituer un mélange réactionnel initial, qui était introduit, à ladite température, dans l'étage initial 3a d'oxydation catalytique de l'unité d'oxydation catalytique 2a, par le conduit 16, puis les conduits 31a et 30a.

Dans cet étage initial 3a, opérant de manière adiabatique, une fraction de l'H₂S était oxydée sélectivement en soufre, ledit soufre se déposant sur le catalyseur. La température en sortie dudit étage atteignait 120°C et était maintenue à cette valeur par le contrôleur de température 57a agissant sur la vanne 51 pour ajuster le débit d'air délivré par le conduit 50 à travers cette vanne. Le milieu gazeux issu de l'étage initial 3a était additionné de 2,08 kmoles/h d'air, par le conduit 53a à travers la vanne 54a, et le mélange ainsi obtenu était refroidi à 90°C, dans l'échangeur de chaleur 27a, pour constituer un mélange réactionnel intermédiaire, qui était introduit, à la température de 90°C, dans l'étage intermédiaire 4a de l'unité d'oxydation catalytique 2a.

Dans cet étage intermédiaire 4a, opérant de manière adiabatique, une nouvelle fraction de l'H₂S était oxydée sélectivement en soufre, ledit soufre se déposant sur le catalyseur. La température en sortie dudit étage atteignait 120°C et était maintenue à cette valeur par le contrôleur de température 58a agissant sur la vanne 54a pour ajuster le débit d'air délivré par le conduit 53a à travers cette vanne. Le milieu gazeux issu de l'étage intermédiaire 4a était additionné de 2,4 kmoles/h d'air, par le conduit 55a à travers la vanne 56a, et le mélange ainsi obtenu était refroidi à 90°C, dans l'échangeur de chaleur 29a, pour constituer un mélange réactionnel final, qui était introduit à la température de 90°C, dans l'étage final 5a de l'unité d'oxydation catalytique 2a. La quantité d'air précitée représente environ 1,5 fois la quantité stoéchiométrique d'air nécessaire à l'oxydation en soufre de l'H₂S contenu dans le mélange réactionnel final.

Dans cet étage final 5a, la totalité de l'H₂S présent dans le milieu réactionnel final était oxydée en soufre, ledit soufre se déposant sur le catalyseur. Par le conduit 38a, on évacuait de l'étage final 5a d'oxydation catalytique de l'unité d'oxydation catalytique 2a un gaz résiduaire épuré ayant une température de 112,5°C et une teneur volumique en oxygène égale à 0,08 %, lequel gaz épuré était acheminé par le conduit 39a, à travers la vanne 40a, dans le conduit d'évacuation 41 du gaz résiduaire épuré.

L'excès d'air correspondant à la teneur volumique précitée en oxygène dans le gaz résiduaire épuré évacué par le conduit 41, est maintenu par le régulateur 59 de teneur en oxygène qui agit sur la vanne 56a pour ajuster le débit d'air délivré par le conduit 55a à travers cette vanne.

Le gaz résiduaire traité, évacué par le conduit 41, ne renfermait plus que des traces, à savoir moins de 200 ppm en volume, de composés soufrés.

Le gaz de balayage, utilisé pour la régénération des catalyseurs chargés de soufre des étages d'oxydation catalytique 3b, 4b et 5b de l'unité d'oxydation catalytique 2b en phase de régénération/refroidissement, était introduit, par le conduit 38b, dans ladite unité d'oxydation catalytique 2b après avoir été amené à une température comprise entre 250°C et 350°C et balayait successivement les catalyseurs chargés de soufre de l'étage final 5b, de l'étage intermédiaire 4b et de l'étage initial 3b de l'unité d'oxydation catalytique 2b. Le gaz de balayage chargé de soufre, issu de l'unité d'oxydation catalytique 2b en phase de régénération, par le conduit 30b, passait ensuite dans le condenseur à soufre 37 du circuit de régénération, pour y être refroidi à environ 125°C de manière à séparer la plus grande partie du soufre qu'il contenait, puis il retournait au réchauffeur 45 pour être réutilisé pour la régénération. Les catalyseurs régénérés étaient ensuite refroidis en faisant passer dans l'unité d'oxydation catalytique 2b les contenant le gaz de balayage issu du condenseur à soufre 37 et circulant par la dérivation 46 court-circuitant le réchauffeur 45.

Les unités d'oxydation catalytique 2a et 2b opéraient alternativement pendant 30 heures en phase de réaction et pendant 30 heures, dont 10 heures de refroidissement, en phase de régénération/refroidissement.

Le rendement en soufre de l'ensemble comportant l'usine à soufre, fournissant le gaz résiduaire à traiter, et l'installation comprenant le réacteur d'hydrogénation et d'hydrolyse et les unités d'oxydation catalytique 2a et 2b, renfermant chacune trois étages de catalyseur promoteur de l'oxydation sélective de l'H₂S en soufre et fonctionnant selon l'invention, était supérieur à 99,9 %.

## Revendications

1. Procédé pour l'oxydation complète en soufre, de l'H₂S présent dans un gaz en concentration comprise entre 0,7% et 3% en volume, dans lequel on opère dans une unité d'oxydation catalytique comportant une pluralité d'étages d'oxydation catalytique disposés en série et comprenant un étage initial, un étage final et éventuellement au moins un étage intermédiaire, lesdits étages renfermant chacun un catalyseur apte à promouvoir l'oxydation sélective de l'H₂S en soufre dans un intervalle de températures compris entre 90°C et 130°C, on introduit le gaz à traiter renfermant H₂S à l'entrée de l'étage initial d'oxydation catalytique avec une température comprise entre 80°C et 100°C et fait passer ledit gaz successivement dans chacun des étages d'oxydation catalytique au contact du catalyseur d'oxydation qu'ils renferment et effectue en outre une injection d'un gaz renfermant de l'oxygène libre dans chacun desdits étages d'oxydation catalytique pour réaliser dans chaque étage d'oxydation catalytique une oxydation au moins partielle de l'H₂S du gaz traversant cet étage en soufre par l'oxygène du gaz renfermant de l'oxygène libre, le soufre formé se déposant sur le catalyseur de chaque étage d'oxydation catalytique, et on évacue en sortie de l'étage final d'oxydation catalytique un gaz épuré à faible teneur résiduelle en H₂S, ledit procédé se caractérisant en ce que l'on amène le gaz renfermant H₂S à une température comprise entre 80°C et 100°C préalablement à son entrée dans chacun des étages intermédiaires éventuels et final d'oxydation catalytique, en ce qu'on contrôle la quantité de gaz renfermant de l'oxygène libre introduite dans l'étage initial et chacun des éventuels étages intermédiaires d'oxydation catalytique de telle sorte que la température du milieu gazeux à la sortie de chacun desdits étages d'oxydation catalytique, qui fonctionnent de manière adiabatique, soit au plus égale à 130°C, en ce que l'on contrôle la quantité de gaz renfermant de l'oxygène libre introduite dans l'étage final d'oxydation catalytique pour fournir un excès prédéterminé d'oxygène dans le gaz épuré entraînant une oxydation totale de l'H₂S passant dans ledit étage final, tout en maintenant des températures au plus égales à 130°C dans cet étage final d'oxydation catalytique, si besoin est par refroidissement dudit étage final par échange indirect de chaleur avec un fluide froid.

2. Procédé selon la revendication 1, **caractérisé en ce que** l'on amène le gaz renfermant H₂S à la température comprise entre 80°C et 100°C avant son introduction dans chacun des étages d'oxydation catalytique, dans lequel il doit être injecté, par échange indirect de chaleur, externe aux étages d'oxydation catalytique, avec un fluide ayant une température appropriée.

3. Procédé selon la revendication 1 ou 2, **caractérisé en ce que** le gaz renfermant de l'oxygène libre est prémélangé au gaz renfermant H₂S avant leur introduction dans chacun des étages d'oxydation catalytique.

4. Procédé selon la revendication 2, **caractérisé en ce que** le gaz renfermant de l'oxygène libre est prémélangé au gaz renfermant H₂S, avant la phase d'échange indirect de chaleur destinée à amener la température du gaz entre 80°C et 100°C préalablement à son introduction dans chacun des étages d'oxydation catalytique.

5. Procédé selon l'une des revendications 1 à 4, **caractérisé en ce que** le catalyseur d'oxydation sélective de l'H₂S en soufre, contenu dans chacun des étages d'oxydation catalytique de l'unité d'oxydation catalytique, présente un volume poreux allant de 15 cm³ à 70 cm³ par 100 g de catalyseur.

6. Procédé selon l'une des revendications 1 à 5, **caractérisé en ce que** le catalyseur d'oxydation est constitué d'une phase active, consistant en un ou plusieurs oxydes et/ou sels d'un ou plusieurs métaux de transition, déposée sur un support en un matériau réfractaire ou sur un support de charbon actif.

7. Procédé selon la revendication 6, **caractérisé en ce que** la phase active, comptée en poids de métal, représente 0,1 % à 15 % et plus particulièrement 0,2 % à 7 % en poids du catalyseur d'oxydation.

8. Procédé selon l'une des revendications 1 à 7, **caractérisé en ce que** l'unité d'oxydation catalytique renferme trois étages d'oxydation catalytique, à savoir un étage initial et un étage final séparés par un étage intermédiaire.

9. Procédé selon l'une des revendications 1 à 8, **caractérisé en ce que** l'on régénère les catalyseurs d'oxydation chargés de soufre contenus dans les étages d'oxydation catalytique de l'unité d'oxydation catalytique en balayant successivement lesdits catalyseurs au moyen d'un gaz oxydant, en opérant à des températures comprises entre 200°C et 500°C et plus particulièrement entre 250°C et 450°C, pour vaporiser le soufre retenu sur ledits catalyseurs, puis l'on refroidit les catalyseurs régénérés jusqu'à la température requise pour une nouvelle mise en oeuvre de la réaction d'oxydation catalytique, ce refroidissement étant réalisé au moyen d'un gaz ayant une température appropriée, lequel gaz de refroidissement renferme éventuellement de la vapeur d'eau au moins pendant la phase finale dudit refroidissement.

10. Procédé selon la revendication 9, **caractérisé en ce que** l'on utilise plusieurs unités d'oxydation catalytique, qui fonctionnent de telle sorte que l'une au moins desdites unités soit en phase régénération/ refroidissement, tandis que les autres unités sont en phase d'oxydation catalytique ou bien qu'au moins une unité d'oxydation catalytique soit en phase de régénération et qu'au moins une unité d'oxydation catalytique soit en phase de refroidissement, tandis que les autres unités d'oxydation catalytique sont en phase de réaction catalytique.

11. Application du procédé selon l'une des revendications 1 à 10, au traitement d'un gaz renfermant H₂S en concentration volumique comprise entre 0,7 % et 3 %, qui est obtenu en soumettant un gaz résiduaire d'usine à soufre à une étape d'hydrogénation et d'hydrolyse pour transformer en H₂S tous les produits soufrés présents dans ledit gaz résiduaire.

## Patentansprüche

1. Verfahren für die vollständige Oxydation in Schwefel von in einem Gas mit einer Konzentration zwischen 0,7 und 3 Vol.-% enthaltenem H₂S, welches in einer katalytischen Oxydationseinheit durchgeführt wird, welche eine Mehrzahl von in Serie geschalteten katalytischen Oxydationsetagen aufweist, umfassend eine erste Etage, eine letzte Etage und gegebenenfalls mindestens eine Zwischenetage, wobei diese Etagen jeweils einen für die Förderung der selektiven Oxydation von H₂S in Schwefel in dem Temperaturintervall von 90°C bis 130°C geeigneten Katalysator aufweisen, wobei das zu behandelnde H₂S enthaltende Gas am Einlass der ersten katalytischen Oxydationsetage mit einer Temperatur zwischen 80°C und 100°C eingeführt wird und das Gas nacheinander durch jede Etage in Kontakt mit dem in diesen befindlichen Oxydationskatalysator durchgeführt wird und außerdem ein freien Sauerstoff aufweisendes Gas in jede katalytische Oxydationsetage eingespritzt wird, um in jeder katalytischen Oxydationsetage über den Sauerstoff des freien Sauerstoff enthaltenden Gases eine mindestens partielle Oxydation des H₂S des durch diese Etage hindurch geführten Gases in Schwefel zu erhalten, wobei der gebildete Schwefel sich auf den Katalysator in jeder katalytischen Oxydationsetage niederschlägt, und am Ausgang der letzten katalytischen Oxydationsetage ein gereinigtes Gas mit geringer Restgehalt an H₂S abgezogen wird, wobei das Verfahren sich **dadurch gekennzeichnet, dass** das H₂S enthaltende Gas vor dem Eintritt in die jeweiligen End- bzw. so vorhanden Zwischenetagen der katalytischen Oxydation auf eine Temperatur von zwischen 80°C und 100°C gebracht wird, dass die Menge an in die erste Etage der katalytischen Oxydation und soweit vorhanden in die Zwischenetagen eingespritztem freien Sauerstoff enthaltendem Gas derart eingestellt wird, dass die Temperatur des Gasmilieus am Ausgang jeder katalytischen Oxydationsetage, welche adiabatisch geführt werden, höchstens 130°C beträgt, dass die Menge an freien Sauerstoff enthaltendem Gas, welches in die Endetage der katalytischen Oxydation eingespritzt wird, derart eingestellt wird, dass ein vorbestimmter Sauerstoffüberschuss in dem gereinigten Gas erhalten wird, der zu einer vollständigen Oxydation des durch diese Endetage hindurch geführten H₂S führt, wobei gleichzeitig die Temperaturen der Endetage der katalytischen Oxydation auf höchstens 130°C gehalten werden, gegebenenfalls durch Kühlung dieser Endetage durch indirekten Wärmetausch mit einem kalten Fluid.

2. Verfahren gemäß Anspruch 1, **gekennzeichnet dadurch, dass** das H₂S enthaltende Gas vor dem Einführung in die jeweiligen katalytischen Oxydationsetagen, in welche dieses eingespritzt werden soll, durch indirekten Wärmetausch ausserhalb der katalytischen Oxydationsetagen mit einem eine geeignete Temperatur aufweisendem Fluid auf eine Temperatur von zwischen 80°C und 100°C gebracht wird.

3. Verfahren gemäß Anspruch 1 oder 2, **gekennzeichnet dadurch, dass** das freien Sauerstoff enthaltende Gas vor der Einführung in die jeweiligen katalytischen Oxydationsetagen mit dem H₂S enthaltenden Gas vorgemischt wird.

4. Verfahren gemäß Anspruch 2, **gekennzeichnet dadurch, dass** das freien Sauerstoff enthaltende Gas vor der indirekten Wärmetauschphase, welche dazu dient, das Gas auf eine Temperatur von zwischen 80°C und 100°C zu bringen, und vor der Einführung in die jeweiligen katalytischen Oxydationsetagen mit dem H₂S enthaltenden Gas vorgemischt wird.

5. Verfahren gemäß mindestens einem der Ansprüche 1 bis 4, **gekennzeichnet dadurch, dass** in jeder der katalytischen Oxydationsetagen enthaltene selektive Oxydationskatalysator von H₂S in Schwefel ein Porenvolumen von 15cm³ bis 70 cm³ pro 100g Katalysator aufweist.

6. Verfahren gemäß mindestens einem der Ansprüche 1 bis 5, **gekennzeichnet dadurch, dass** der Oxydationskatalysator aus einer aktiven Phase besteht, welche besteht aus mehreren Oxyden und/oder Salzen von einem oder mehreren Übergangsmetallen, welche aufgebracht ist auf einen Träger aus einem hitzebeständigen Material oder auf einen Träger aus Aktivkohle.

7. Verfahren gemäß Anspruch 6, **gekennzeichnet dadurch, dass** die aktive Phase, ausgedrückt als Metallgewicht, 0,1 bis 15Gew. % und insbesondere 0,2 bis 7Gew. % des Oxydationskatalysator ausmacht.

8. Verfahren gemäß mindestens einem der Ansprüche 1 bis 7, **gekennzeichnet dadurch, dass** die katalytische Oxydationseinheit drei katalytische Oxydationsetagen aufweist, nämlich eine erste Etage und eine Endetage, welche von einer Zwischenetage getrennt sind.

9. Verfahren gemäß mindestens einem der Ansprüche 1 bis 8, **gekennzeichnet dadurch, dass** die in den katalytischen Oxydationsetagen der katalytischen Oxydationseinheit enthaltenen, mit Schwefel beladenen Katalysatoren durch sukzessives Spülen der Katalysatoren mit einem oxydierenden Gases bei Temperaturen von zwischen 200°C und 500°C und insbesondere zwischen 250°C und 450°C regeneriert werden, um den auf den Katalysatoren zurückgehaltenen Schwefel zu verdampfen, und die regenerierten Katalysatoren auf die für die neuerliche Durchführung der katalytischen Oxydationsreaktion benötigte Temperatur abgekühlt werden, wobei die Abkühlung mittels einem Gas mit einer geeigneten Temperatur durchgeführt wird, wobei dieses Abkühlungsgas gegebenenfalls, mindestens während der Endphase der Abkühlung, Wasserdampf enthält.

10. Verfahren gemäß Anspruch 9, **gekennzeichnet dadurch, dass** mehrere katalytische Oxydationseinheiten verwendet werden, welche derart betrieben werden, dass mindestens eine dieser Einheiten entweder sich in der Regenerierungsphase oder Abkühlungsphase befinden während sich die anderen in der katalytischen Oxydationsphase befinden, oder dass mindestens eine katalytische Oxydationseinheit sich in der Regenerierungsphase befindet und mindestens eine katalytische Oxydationseinheit sich in der Abkühlphase befindet, während sich die anderen katalytischen Oxydationseinheiten in der katalytischen Reaktionsphase befinden.

11. Verwendung des Verfahrens gemäß mindestens einem der Ansprüche 1 bis 10 für die Behandlung von Gas, welches 0,7 bis 3 Vol.-% H₂S enthält, welches aus schwefelhaltigem Fabrikabgas erhalten wird, das einer Hydrierungsstufe und einer Hydrolysestufe unterworfen wird, um alle im Abgas befindlichen Schwefelverbindungen in H₂S zu überführen.

## Claims

1. Process for the complete oxidation to sulphur of the H₂S present in a gas in a concentration of between 0.7 % and 3 % by volume, in which the operation is carried out in a catalytic oxidation unit comprising a plurality of catalytic oxidation stages arranged in series and including an initial stage, a final stage and optionally at least one intermediate stage, each of the said stages containing a catalyst promoting the selective oxidation of H₂S to sulphur and operating at temperatures which are lower than the dew point of the sulphur resulting from the oxidation, the gas to be treated containing H₂S is introduced at the entry of the initial catalytic oxidation stage and the said gas is successively passed through each of the catalytic oxidation stages in contact with the oxidation catalyst which they contain and additionally an injection of a gas containing free oxygen into each of the said catalytic oxidation stages is performed in order to carry out in each catalytic oxidation stage an at least partial oxidation of the H₂S in the gas passing through this stage to sulphur by the oxygen in the gas containing free oxygen, the sulphur formed being deposited on the catalyst in each catalytic oxidation stage, and a purified gas with a low residual content of H₂S is discharged at the exit of the final catalytic oxidation stage, the said process being **characterized in that** the gas containing H₂S is brought to a temperature of between 80°C and 100°C before it enters each of the catalytic oxidation stages, **in that** the quantity of gas containing free oxygen introduced into the initial stage and each of the optional intermediate stages of catalytic oxidation is controlled so that the temperature of the gas mixture at the exit of each of the said catalytic oxidation stages, which operate adiabatically, is at most equal to the maximum temperature θs of the temperature range in which the oxidation catalyst is capable of promoting the required selective oxidation of H₂S to sulphur and does not exceed 150°C, **in that** the quantity of gas containing free oxygen which is introduced into the final catalytic oxidation stage is controlled in order to provide a predetermined excess of oxygen in the purified gas entailing a total oxidation of the H₂S passing through the said final stage and **in that** the oxidation of the H₂S in the final catalytic oxidation stage is carried out at temperatures which are at most equal to the said temperature θs and not exceeding 150°C, if need be by cooling the said final catalytic stage by indirect heat exchange with a cold fluid.

2. Process according to Claim 1, **characterized in that** the gas containing H₂S is brought to the temperature of between 80°C and 100°C before it is introduced into each of the catalytic oxidation stages into which it is to be injected, by indirect heat exchange, external to the catalytic oxidation stages, with a fluid which is at an appropriate temperature.

3. Process according to Claim 1 or 2, **characterized in that** the gas containing free oxygen is premixed with the gas containing H₂S before they are introduced into each of the catalytic oxidation stages.

4. Process according to Claim 2, **characterized in that** the gas containing free oxygen is premixed with the gas containing H₂S before the indirect heat exchange step intended to bring the temperature of the gas between 80°C and 100°C before it is introduced into each of the catalytic oxidation stages.

5. Process according to one of Claims 1 to 4, **characterized in that** the catalyst for selective oxidation of H₂S to sulphur, present in each of the catalytic oxidation stages of the catalytic oxidation unit, has a pore volume ranging from 15 cm³ to 70 cm³ per 100 g of catalyst.

6. Process according to one of Claims 1 to 5, **characterized in that** the oxidation catalyst consists of an active phase consisting of one or more oxides and/or salts of one or a number of transition metals, which is deposited on a support of a refractory material or on an active carbon support.

7. Process according to Claim 6, **characterized in that** the active phase, calculated as weight of metal, represents 0.1 % to 15 % and more particularly 0.2 % to 7 % by weight of the oxidation catalyst.

8. Process according to one of Claims 1 to 7, **characterized in that** the catalytic oxidation unit contains three catalytic oxidation stages, namely an initial stage and a final stage which are separated by an intermediate stage.

9. Process according to one of Claims 1 to 8, **characterized in that** the sulphur-laden oxidation catalysts present in the catalytic oxidation stages of the catalytic oxidation unit are regenerated by successively purging the said catalysts by means of an oxidizing gas, the operating being carried out at temperatures of between 200°C and 500°C and more particularly between 250°C and 450°C, in order to vaporize the sulphur retained on the said catalysts, and then the regenerated catalysts are cooled to the temperature required for a new application of the catalytic oxidation reaction, this cooling being produced by means of a gas which is at an appropriate temperature, which cooling gas optionally contains water vapour at least during the final phase of the said cooling.

10. Process according to Claim 9, **characterized in that** a number of catalytic oxidation units are employed which function so that at least one of the said units is in a regeneration/cooling phase whereas the other units are in a catalytic oxidation phase or else that at least one catalytic oxidation unit is in a regeneration phase and that at least one catalytic oxidation unit is in a cooling phase, whereas the other catalytic oxidation units are in a catalytic reaction phase.

11. Application of the process according to one of Claims 1 to 10 to the treatment of a gas containing H₂S in a volume concentration of between 0.7 % and 3 %, which is obtained by subjecting a residual gas from a sulphur plant to a hydrogenation and hydrolysis stage in order to convert to H₂S all the sulphur products present in the said residual gas.
